# EUROPÄISCHE PATENTSCHRIFT

(11) **EP 0 757 200 B1**
(45) Veröffentlichungstag und Bekanntmachung des Hinweises auf die Patenterteilung: **05.04.2000**
(21) Anmeldenummer: 96110646.5
(22) Anmeldetag: 02.07.1996
(51) Int. Cl.: F16K 31/06

(54) **Doppel-Sicherheitsmagnetventil**
Double safety magnetic valve
Soupape magnétique de double sureté

(30) Priorität: 12.07.1995 DE 29511223 U
(43) Veröffentlichungstag der Anmeldung: 05.02.1997
(73) Patentinhaber: KARL DUNGS GMBH & CO., D-73660 Urbach (DE)
(72) Erfinder: Neu, Kunibert, Dr.-Ing., 73117 Wangen-Oberwälden (DE)
(74) Vertreter: KOHLER SCHMID + PARTNER

(56) Entgegenhaltungen:
- EP-A- 0 107 445
- DE-A- 1 964 297
- DE-A- 2 601 055
- DE-A- 2 856 113
- DE-A- 3 134 613
- DE-B- 1 923 627
- FR-A- 2 273 213
- GB-A- 846 659

## Beschreibung

Die Erfindung betrifft ein Doppel-Sicherheitsmagnetventil mit zwei voneinander unabhängigen, in Serie geschalteten und in einem gemeinsamen Gehäuse untergebrachten Ventilen mit Stellgliedern, die jeweils einen Ventilteller und einen mit dem Ventilteller kraft- oder formschlüssig verbundenen Anker umfassen, wobei die Ventilteller gegen den Federdruck jeweils mindestens einer Schließfeder bei Stromdurchfluß durch einen eine Magnetspule enthaltenden Magnetantrieb von ihrem jeweiligen Ventilsitz abheben und dadurch einen Öffnungsquerschnitt für einen Fluidstrom freigeben.

Derartige Doppel-Magnetventile sind aus den Firmenprospekten "DMV-D/11, DMV-DLE/11, 7.11 und 7.12" der Firma Karl Dungs GmbH und & Co., Schorndorf, März 1995, bekannt. Sie werden insbesondere als Sicherheitsventile an der Gas-Eingangsseite von Gaswärmererzeugern eingesetzt.

Gaswärmeerzeuger werden gasseitig durch eine Hintereinanderschaltung von in Normen festgelegten Einzelarmaturen mit dem Gasanschluß (Gaszähler, Druckreduziereinheit o.ä.) verbunden. Diese als Gasstraße für die Gasanwendung benannte Strecke beinhaltet neben dem Gasfilter die Komponenten Gasdruckregler, erstes und zweites Sicherheitsabsperrventil, die in der Regel elektrisch ansteuerbare Magnetventile sind. Gasdruckregler sind in der Regel federbelastete, d.h. über eine Einstellfeder auf den gewünschten Ausgangsdruck einstellbare Regler, wie sie z.B. im Datenblatt "Druckregelgerät Typ FRS" der Firma Karl Dungs GmbH & Co., Schorndorf, Februar 1993, beschrieben und dargestellt sind. Einstufige Sicherheitsmagnetventile, die mit einem derartigen Regler kombiniert werden können, sind beispielsweise im Datenblatt "Sicherheits-Magnetventile, einstufig, Typ MV/5, MVD/5, MVDLE/5" der Firma Karl Dungs GmbH & Co. aus dem November 1993 beschrieben.

Die Komponenten einer solchen Gasstraße werden über Gewinderohre oder mit Flanschen untereinander verbunden, was den Montageaufwand entsprechend beeinflußt und eine je nach Nennweite gestaffelte Gesamtbaulänge der Gasstraße ergibt.

Das Zusammenfügen von Filter, Regler und Ventilen in eine Baueinheit war der erste Integrationsschritt, als dessen Resultat der "GasMultiBloc" entstand, wie er im entsprechenden Datenblatt der Firma Dungs vom März 1993 beschrieben ist. Diese Armaturen befinden sich seit etwa 12 Jahren in der Praxis in den vielfältigsten Variationen im Einsatz.

Kennzeichnendes Merkmal einer typischen Gasstraßenanordnung ist der Einbauort des Reglers vor den Ventilen, um beim Öffnen der Ventile einen Anfahrstoß zu vermeiden. Da der Regler auch bei geschlossenen Ventilen vom Gasdruck beaufschlagt wird, geht er automatisch in Geschlossenstellung.

Dies ist seine Startposition, wenn die Ventile geöffnet werden. Die Eigendämpfung verhindert dann ein schnelles Öffnen des Reglerstellgliedes.

Wird der Regler nach den beiden Ventilen eingebaut, so nehmen die Ventile nach Abschaltung dem Regler den Schließdruck weg und das Stellglied geht in Offenstellung, was beim Neustart zu einer Gasüberversorgung, d.h. zum Anfahrstoß am Gasbrenner führt.

Beim "GasMultiBloc" wird das eingangsseitige Ventilstellglied gleichzeitig als Reglerstellglied eingesetzt und muß in Geschlossenstellung den Dichtheitsanforderungen an Ventilsitze entsprechen. Für eine Ventil-Regler-Kombination ist es dabei unwesentlich, ob sie eingangsseitig oder ausgangsseitig angeordnet ist, da die Schließfunktion (Schließfeder) des Ventils auch das Stellglied des Reglers in Geschlossenstellung bringt. Ein Anfahrstoß wird vermieden. Was bleibt ist jedoch das jedem Regler eigene Einschwingverhalten, das sich durch eine kleine Überschwingweite des geregelten Gasstromes messen läßt.

Um ein sanftes Anfahren des Brenners zu bewerkstelligen, wird einem Ventil die Funktion "langsames Öffnen" zugeteilt, d.h. die Öffnungskraft des Ankers wird über ein Dämpfungsglied (siehe z.B. die "Hydraulikbremse" beim Typ MVDLE/5) in dem oben zitierten Datenblatt "Sicherheitsmagnetventile, einstufig ...") verzögert. Der langsam sich vergrößernde Ventilquerschnitt dosiert die dem Brenner zugeführte Gasmenge über einen Zeitraum von ca. 20 Sekunden bis zur maximalen Leistung.

Eine Integration von zwei Sicherheitsmagnetventilen in ein Gehäuse stellt die Entwicklung der Doppel-Magnetventilbaureihe dar, wie sie in den eingangs beschriebenen Datenblättern "Doppelmagnetventil ..." publiziert ist. Grund hierfür waren neben der Wirtschaftlichkeit die neuen europäischen Normen, die für jede Gasstraße bindend zwei in Serie geschaltete Sicherheitsabsperrventile vorschreiben, z.B. prEN 676 für Gasgebläsebrenner.

Aus der DE-A-28 56 113 sind ein 3/2- und ein 4/2-Wege-Magnetventil bekannt. Das 3/2-Wege-Magnetventil ist ein Doppelsitzventil mit einem einzigen Schließkörper, der jeweils die eine Ventilsitzöffnung freigibt, wenn er die andere Ventilsitzöffnung verschließt. Das 4/2-Wege-Magnetventil umfaßt zwei Schließkörper, die auf einer gemeinsamen Achse übereinander angeordnet und über eine Stange miteinander starr verbunden sind. Die beiden Schließkörper bewegen sich synchron zueinander, d.h., die beiden den Schließkörpern zugeordneten Ventile sind voneinander nicht unabhängig.

Aufgabe der vorliegenden Erfindung ist es demgegenüber, Doppel-Sicherheitsmagnetventile der eingangs beschriebenen Art mit den gleichen Sicherheitsmerkmalen in einer höheren Integrationsstufe noch kompakter zu gestalten und damit einerseits eine platzsparendere, andererseits eine wesentlich preiswerter herzustellende Einheit zu entwickeln.

Erfindungsgemäß wird diese Aufgabe auf überraschend einfache Weise dadurch gelöst, daß die beiden Stellglieder auf einer gemeinsamen Achse, vorzugsweise übereinander angeordnet sind, daß das erste Stellglied einen Hohlanker aufweist, in welchen der Magnetanker des zweiten Stellgliedes längsverschiebbar entlang der gemeinsamen Achse ragt, und daß nur ein einziger Magnetantrieb für beide Stellglieder vorgesehen ist, in den der Hohlanker und der Magnetanker hineinragen.

Es werden zwei voneinander unabhängige Stellglieder durch einen gemeinsamen Magnetantrieb geöffnet, wodurch die Ventileinheit besonders kompakt gestaltet werden kann. Bei Abschaltung des Magneten führen die beiden Schließfedern den Schließhub völlig voneinander unabhängig durch. Damit kann die Sicherheitsanforderung an Gassicherheitsventile erfüllt werden. Die Prüfung der Ventilklasse durch eine Gegendruckbeaufschlagung, d.h. durch Aufbringung eines Druckes auf den Ventilteller entgegen der Schließfederkraft mit der Maßgabe eine definierte Leckmenge nicht zu überschreiten, kann für jedes Stellglied getrennt erfolgen.

Besonders bevorzugt ist eine Ausführungsform des erfindungsgemäßen Doppel-Sicherheitsmagnetventils, bei der der Magnetantrieb mindestens eine in einem Magnetgehäuse angeordnete Magnetspule sowie eine radial innerhalb der Magnetspule angeordnete Magnetschlußhülse umfaßt, welche aus einem magnetischen Oberteil, einem in axialer Richtung der gemeinsamen Achse unterhalb daran anschließenden nicht-magnetischen Mittelteil und einem in axialer Richtung an das Mittelteil anschließenden, magnetischen Unterteil besteht, wobei der Hohlanker beim Ventilöffnungshub in die Magnetschlußhülse hineingezogen wird. Bei einer derart 3-stufig aufgebauten Magnetschlußhülse lassen sich besonders günstige magnetische Kraftlinienverteilungen im Magnetantrieb erzeugen.

Der Ventilöffnungshub des Hohlankers in der Magnetschlußhülse des Magnetantriebs läßt sich durch eine Platine aus nicht-magnetischem Material begrenzen, die bei Extremhub des Hohlankers von innen gegen eine Polanlage der Magnetschlußhülse im Magnetantrieb anschlägt. Durch die nicht-magnetische Platine wird ein "Festkleben" des Hohlankers an der Polanlage nach Abschalten des Spulenstromes durch magnetische Remanenz in der Magnetschlußhülse und im Hohlanker verhindert. Der Ventilöffnungshub des Ankers im Hohlanker läßt sich durch eine Scheibe aus nicht-magnetischem Material begrenzen, die bei Extremhub des Ankers von innen gegen eine Polanlage des Hohlankers anschlägt. Damit wird ein "Festkleben" des inneren Ankers an der Polanlage des Hohlankers vermieden.

Bevorzugt ist eine Ausführungsform, bei der der Hohlanker aus magnetischem Material gefertigt ist. In diesem Falle können die beiden Ventile getrennt geöffnet werden, da der innere Anker in jedem Fall ebenfalls magnetisches Material aufweisen muß. Bei einer alternativen Ausführungsform ist der Hohlanker aus nicht-magnetischem Material, vorzugsweise aus dünnwandigem Rohr mit dünnem Boden, insbesondere als Tiefziehteil ausgebildet. Dies hat den Vorteil, daß der Hohlanker einerseits sehr preiswert herstellbar ist, und daß andererseits die oben erwähnte Platine sowie die Scheibe, die ein Festkleben des Hohlankers an der Polanlage in der Magnetschlußhülse sowie ein Festkleben des Vollankers an der Polanlage des Hohlankers verhindern sollen, entfallen können. Allerdings kann bei dieser Ausführungsform der Hohlanker nur gemeinsam mit dem Vollanker angezogen werden. Der magnetische Vollanker muß dabei die Hubkräfte der Öffnung beider Ventile erzeugen.

Bei einer weiteren Ausführungsform des erfindungsgemäßen Doppel-Sicherheitsmagnetventils ist vorgesehen, daß die erste Schließfeder, die den ersten Ventilteller gegen den ersten Ventilsitz drückt, ungefähr denselben Federdruck auf den ersten Ventilteller ausübt, wie die zweite Schließfeder auf den zweiten Ventilteller, und daß die Sitzdurchmesser der Ventilsitze im wesentlichen gleich groß sind.

Alternativ dazu kann bei einer weiteren Ausführungsform die erste Schließfeder, die den ersten Ventilteller gegen den ersten Ventilsitz drückt, einen erheblich geringeren, vorzugsweise mindestens 20 % geringeren Federdruck auf den ersten Ventilteller ausüben, als die zweite Schließfeder auf den zweiten Ventilteller. Damit ist sichergestellt, daß bei Stromdurchfluß durch den Magnetantrieb immer zuerst das erste Stellglied mit dem Hohlanker öffnet, während das zweite Stellglied erst bei einer erhöhten Magnetkraft vom zweiten Ventilsitz abhebt.

Besonders bevorzugt ist eine Ausführungsform, bei der der Magnetantrieb einen zweistufigen Hubmagnet mit zwei gleichen oder zwei unterschiedlich großen Hubkräften F₁ und F₂ umfaßt. Damit können die beiden Stellglieder gezielt getrennt angefahren werden. Bei einer besonders einfachen Weiterbildung dieser Ausführungsform umfaßt der Hubmagnet eine Magnetspule mit zwei elektrisch von einander getrennten Wicklungen. Alternativ oder ergänzend kann bei einer Weiterbildung eine elektronische Schaltvorrichtung vorgesehen sein, mit der die Speise-Spannung und/oder der Speise-Strom für die Magnetspule in mindestens zwei unterschiedlichen Betriebsstufen definiert erhöht bzw. erniedrigt werden kann, so daß der Hubmagnet eine Hubkraft F₁ oder eine Hubkraft F₂ ausübt.

Besonders vorteilhaft ist eine Weiterbildung der obengenannten Ausführungsform, bei der der Hohlanker einen im wesentlichen rohrförmigen Grundkörper aus magnetischem Material, ein in axialer Richtung daran anschließendes Zwischenstück aus nicht-magnetischem Material und ein an diese sich axial anschließendes Deckelstück aus magnetischem Material umfaßt. Mit einem derart 3-stufig aufgebauten Hohlanker kann die spezifische Magnetkraftverteilung bei Stromdurchfluß durch den Magnetantrieb so gestaltet werden, daß auch bei geringen Unterschieden in den beiden Betriebsstufen des Magnetantriebs sichergestellt ist, daß der Hohlanker immer zuerst, und der im Hohlanker laufende Magnetanker des zweiten Magnetventils stets erst danach angezogen wird.

Zur Einstellung des Teilhubes des Hohlankers kann bei einer bevorzugten Ausführungsform im magnetischen Oberteil der Magnetschlußhülse auf der gemeinsamen Achse eine auf den Hohlanker als veränderbarer Hubanschlag wirkende Einstellschraube vorgesehen sein. Durch den einstellbaren Öffnungshub kann der vom Ventil freigegebene Strömungsquerschnitt und damit die durchströmende Fluidmenge variiert werden.

Bei einer weiteren Ausführungsform kann im anschlagseitigen Kopfteil des Hohlankers auf der gemeinsamen Achse eine auf den Anker als veränderbarer Hubanschlag wirkende Teilhubeinstellschraube vorgesehen sein, mit der der Teilhub des inneren Ankers eingestellt und verändert werden kann. Dazu kann im magnetischen Oberteil der Magnetschlußhülse auf der gemeinsamen Achse eine Hilfsvorrichtung zum Verstellen der Teilhubeinstellschraube vorgesehen sein, die vorzugsweise mittels einer Rückstellfeder nach dem Einstellvorgang von der Teilhubeinstellschraube abgehoben wird und sowohl gegenüber dem magnetischen Oberteil als auch gegenüber dem Hohlanker abgedichtet ist. Damit läßt sich die Teilhubeinstellung des inneren Ankers durch den Hohlanker hindurch besonders einfach vornehmen.

Eine weitere Ausführungsform des erfindungsgemäßen Doppel-Sicherheitsmagnetventils zeichnet sich dadurch aus, daß im anschlagseitigen Kopfteil entweder des Hohlankers oder des Ankers ein auf der gemeinsamen Achse nach oben ragender Anschlagstift vorgesehen ist, auf den ein durch das magnetische Oberteil der Magnetschlußhülse hindurchgreifender Hydraulikdämpfer in axialer Richtung einwirkt, der die Hubbewegung des Hohlankers bzw. des Ankers anschlagseitig sanft abbremst. Dadurch wird ein langsames Öffnen des entsprechenden Ventiles bewirkt, wodurch die freigegebene Gasmenge langsam zum Brenner zufließt und eine "sanftes" Anfahren des Brenners gewährleistet.

Bei einer Ausführungsform mit verstellbarem Maximalhub des inneren Magnetankers kann vorgesehen sein, daß der aus dem Kopfteil des Magnetankers nach oben ragende Anschlagstift durch eine axiale Bohrung im Kopfteil des Hohlankers hindurchgreift, und daß um den Anschlagstift ein beidseitig wirkendes Dichtelement angeordnet ist, mit dem der Innenraum des Hohlankers gegenüber der Bohrung im Kopfteil des Hohlankers bei Anschlagen des Magnetankers gegen die Innenseite des Kopfteils des Hohlankers abgedichtet wird. Damit wird u.a. auch sichergestellt, daß der eingangsseitige Gasdruck gegenüber dem Mittelraumdruck der Ventileinheit abgeschottet ist.

Besonders vorteilhaft ist eine Weiterbildung, bei der auf der gemeinsamen Achse im magnetischen Oberteil der Magnethülse eine Einstellbuchse vorgesehen ist, mit der der maximale Hubweg des Hohlankers eingestellt werden kann, und in die der Hydraulikdämpfer von oben und der Anschlagstift von unten hineinragen. Damit können die Maximalhübe beider Einzelventile getrennt voneinander eingestellt werden, wobei in beiden Fällen die "Hydraulikbremse" eine sanfte Öffnungscharakteristik der Ventile sicherstellt. Vorzugsweise kann die Einstellbuchse mittels einer an dem Hydraulikdämpfer vorgesehenen Verstellvorrichtung, beispielsweise mittels eines Innensechskantes, verstellt werden. Am Außenumfang der Einstellbuchse kann eine Dichtung, vorzugsweise ein O-Ring vorgesehen sein, mit der die Außenseite des magnetischen Oberteils gegenüber der Innenbohrung der Magnethülse abgedichtet wird.

Bei einer bevorzugten Ausführungsform des erfindungsgemäßen Doppel-Sicherheitsmagnetventils ist eingangsseitig der Doppelventileinheit ein Druckregler vorgeschaltet. In einer bereits eingerichteten Gasstraße kann beispielsweise durch Nachschalten des erfindungsgemäßen Doppel-Sicherheitsmagnetventils nach einem bereits vorhandenen Druckregler anstelle der bisher üblichen zwei hintereinander geschalteten Magnetventile mit parallelen Achsen die Anlage insgesamt kompakter und betriebssicherer gestaltet werden. Durch das Vorschalten des Druckreglers vor die Doppel-Sicherheitsmagnetventil-Einheit wird, wie eingangs erwähnt, beim Öffnen der Ventile ein Anfahrstoß am Brenner vermieden. Vorteilhafterweise kann der Druckregler als Stellglied ein Doppelsitzventil mit zwei starr durch eine Achse verbundenen Ventiltellern aufweisen, wodurch auch größere Gasströme besonders feinfühlig geregelt werden können.

Ganz besonders bevorzugt ist eine Ausführungsform des erfindungsgemäßen Doppel-Sicherheitsmagnetventils, bei der ausgangsseitig ein Druckregler nachgeschaltet ist, dessen Reglerachse mit der gemeinsamen Achse der Ventileinheit zusammenfällt. Diese Regler-Ventilanordnung ist besonders kompakt und übertrifft sogar den oben erwähnten "GasMultiBloc" der Firma Dungs in ihrer hohen Integrationsdichte der Regel- und Sicherheitsventilfunktionen.

Bei einer Weiterbildung dieser bevorzugten Ausführungsform umfaßt der Druckregler ein Reglerstellglied, das einen an einer längs der gemeinsamen Achse verschieblichen Stange starr befestigten Reglerventilteller aufweist, dessen Außendurchmesser kleiner ist, als der lichte Durchmesser der Ventilsitzbohrung des ausgangsseitigen Ventils, und der bei entsprechender Ausregelung von unten gegen den zweiten Ventilteller des zweiten Stellgliedes anschlägt. Ein ganz besonderer Vorteil dieser Weiterbildung besteht darin, daß durch das Nachschalten des Reglers nach der Ventileinheit eine Verfälschung des Ausgangsdruckes durch die geschalteten Ventile vermieden wird, während andererseits der sonst bei nachgeschaltetem Regler übliche "Anfahrstoß" beim Öffnen der Ventile dadurch verhindert wird, daß nach dem Schließen des zweiten Ventiltellers der Reglerventilteller kraftschlüssig anliegt, so daß kein Raum mehr für ein Gasvolumen bleibt, das nach dem Öffnen der Ventile einen Anfahrstoß am Brenner verursachen könnte.

Um die Sicherheitsanforderungen, insbesondere im Hinblick auf den Schließvorgang des zweiten Ventiles zu gewährleisten, ist bei einer einfach zu realisierenden Weiterbildung vorgesehen, daß der Druckregler eine Regler-Einstellfeder umfaßt, mit deren resultierender Federkraft der Reglerventilteller gegen den zweiten Ventilteller vorgespannt ist, und daß die resultierende Federkraft der Regler-Einstellfeder so gewählt ist, daß die Summe aus dieser resultierenden Federkraft und der maximalen in Richtung dieser resultierenden Federkraft wirkenden Druckkraft auf den Reglerventilteller stets kleiner ist als die Schließkraft der zweiten Schließfeder auf den zweiten Ventilteller.

Besonders bevorzugt ist eine Weiterbildung, bei der an der dem Reglerventilteller abgewandten Ende der Stange ein Membranteller fest mit der Stange verbunden ist, und bei der dem Membranteller eine Arbeitsmembran, die dichtend an der Stange befestigt ist, lose aufliegt. Bei plötzlicher Abschaltung des Antriebsmagneten wird die zweite Schließfeder den zweiten Ventilteller auch gegen den Widerstand des eventuell noch nach oben ragenden Reglerventiltellers nach unten in die Geschlossenstellung drücken, wobei ein kurzzeitiger Druckstau im Raum unterhalb der Arbeitsmembran des Reglers die Abwärtsbewegung des Reglerstellgliedes nicht behindert, da sich die flexible Arbeitsmembran aufgrund des kurzzeitigen Überdrucks vom Membranteller abhebt und nach oben wölbt, während aber die Stange samt Membranteller weiter nach unten bewegt werden und somit ein sicheres Schließen des zweiten Ventils nicht behindern.

Einen weiteren Vorteil bietet eine Weiterbildung, bei der auf der dem Reglerventilteller zugewandten Seite der Arbeitsmembran ein Gegenteller aufliegt, der in Richtung der gemeinsamen Achse verschieblich um die Stange angeordnet ist, und der mittels einer Rückstellfeder kraftschlüssig gegen die Arbeitsmembran gedrückt wird. Durch den federbeaufschlagten Gegenteller wird die abgehobene Arbeitsmembran wieder kraftschlüssig gegen den Membranteller gepreßt, so daß der Regler beim nächsten Auffahren der Ventile unmittelbar und ohne Einschwingzeit wieder aktionsbereit ist.

Bei einer bevorzugten Weiterbildung kann die Regler-Einstellfeder über eine Stellschraube vorspannbar sein, wodurch eine Variation der auf den Regler wirkenden Federkraft ermöglicht wird.

Bei Ausführungsformen kann die Federkraft der Regler-Einstellfeder über einen Umlenkhebel mit bekanntem Übersetzungsverhältnis auf die Regler-Stange wirken, so daß jede beliebige räumliche Anordnung der Regler-Einstellfeder gewählt werden kann.

Bei einer kompakten Ausführungsform ist die Regler-Einstellfeder eine mit ihrer Schraubenachse im wesentlichen senkrecht zur gemeinsamen Achse der Multifunktionseinheit liegend angeordnete Schraubenfeder. Alternativ dazu kann die Regler-Einstellfeder auch eine mit ihrer Schraubenachse im wesentlichen parallel zur gemeinsamen Achse angeordnete Schraubenfeder sein und beispielsweise auch neben dem eigentlichen Reglerglied angeordnet werden.

Eine weitere bevorzugte Ausführungsform zeichnet sich dadurch aus, daß der Druckregler ein Servoregler ist, der einen über einen Ausgangsdruckkanal mit dem Ausgangsdruck nach dem Regler beaufschlagten Pilotregler umfaßt, welcher über eine Regelventilbohrung den Fluiddruck unter einer Arbeitsmembran des Hauptregelgliedes regelt. Derartige Servoregler sind an sich aus der DE 35 31 665 C2 bekannt und haben den Vorteil einer besonders feinfühligen Regelcharakteristik.

Bei einer weiteren vorteilhaften Ausführungsform schließlich ist vorgesehen, daß der Druckregler ein Verhältnisregler ist, der eine Hebelmechanik umfaßt, welche auf der einen Seite über eine Anschlußbohrung mit einem Gebläseluftdruck sowie über einen Ausgangsdruckkanal mit dem Ausgangsdruck nach dem Regler und auf der anderen Seite über einen Anschluß mit dem Feuerraumdruck eines Gasbrenners beaufschlagt ist, wobei die Hebelmechanik eine Regelbohrung, über die der Raum unter einer Arbeitsmembran des Hauptregelgliedes mit dem Ausgangsdruck beaufschlagt werden kann, auf- bzw. zusteuert. Ein derartiger Verhältnisregler ergibt zusammen mit dem erfindungsgemäßen Doppel-Sicherheitsmagnetventil eine besonders kompakte Multifunktional-Armatur für eine Gas/ Luftverbundregelung, deren Wirkungsweise und Vorteile beispielsweise in der DE 43 37 703 C1 ausführlich beschrieben sind.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen schematischen Längsschnitt der durch eine Ausführungsform des erfindungsgemäßen Doppel-Sicherheitsventils mit gemeinsam öffnenden und schließenden Einzelventilen und gleichen Ventilsitzdurchmessern;
- Fig. 2: einen Schnitt durch eine Ausführungsform mit getrennt öffnenden und schließenden Stellgliedern, aber gleich großen Ventildurchmessern;
- Fig. 3: eine Ausführungsform mit einstellbarem Teilhub zur Reduzierung des Volumenstromes, wirksam auf beide Ventilhübe, durch Hubbegrenzung gegenüber dem Hohlanker des eingangsseitigen Ventils;
- Fig. 4: eine Ausführungsform mit einstellbarem Teilhub wirksam auf den Anker des ausgangsseitigen Ventils;
- Fig. 5: eine Ausführungsform mit Hydraulikbremse für langsames Öffnen der beiden Ventile;
- Fig. 6: eine Ausführungsform mit Hydraulikbremse für langsames Öffnen des ausgangsseitigen Ventils;
- Fig. 7: eine Ausführungsform mit Hydraulikbremse für langsames Öffnen des ausgangsseitigen Ventils und einstellbarem Teilhub für den Hohlanker des eingangsseitigen Ventils, wirksam auch für den Hub des ausgangsseitigen Ventils;
- Fig. 8: eine Ausführungsform mit Hydraulikbremse für langsames Öffnen beider Ventile mit für beide Ventile einstellbarem Teilhub;
- Fig. 9a: eine schematische Schnittdarstellung einer zweiachsigen Kombination des erfindungsgemäßen Doppel-Sicherheitsmagnetventils mit einem Gasdruckregler in geschlossener Stellung;
- Fig. 9b: die Ausführungsform nach Fig. 9a mit dem Gasdruckregler in geöffneter Stellung;
- Fig. 10a: eine Ausführungsform des erfindungsgemäßen Doppel-Sicherheitsmagnetventils in einachsiger Kombination mit einem nachgeschalteten Gasdruckregler;
- Fig. 10b: ein Detail aus Fig. 10a mit geöffnetem ausgangsseitigem Ventil und ausgefahrenem Reglerventilteller;
- Fig. 10c: ein Detail aus Fig. 10a, aber mit aufrecht statt liegend angeordneter Reglerfeder;
- Fig. 11: wie Fig. 10a, aber mit Servoregler; und
- Fig. 12: wie Fig. 10a, aber mit Verhältnisregler.

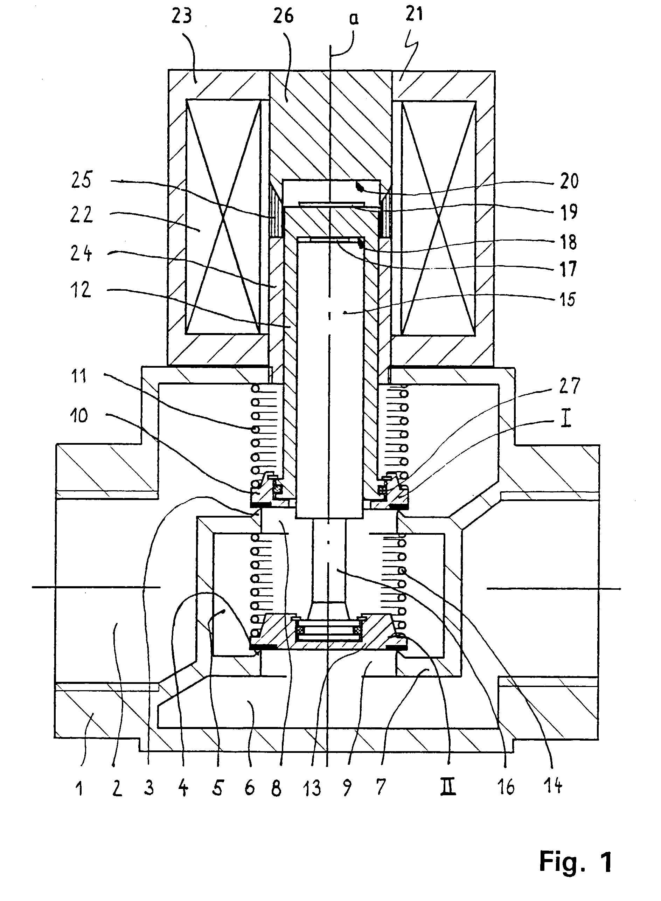

In Fig. 1 ist eine besonders einfache Ausführungsform des erfindungsgemäßen Doppel-Sicherheitsmagnetventiles dargestellt. Dabei sind zwei voneinander unabhängige, in Serie geschaltete Ventile I und II in einem gemeinsamen Gehäuse 1 untergebracht.

Das Gehäuse 1 gliedert sich in drei Räume auf. Der Gaseingangsdruck steht in Gaseintrittsraum 2 an und wird durch einen ersten Ventilsitz 3 abgeschlossen. Zwischen dem ersten Ventilsitz 3 und einem zweiten Ventilsitz 4 liegt ein Zwischenraum 5, der gegenüber Gaseintrittsraum 2 und einem Gasaustrittsraum 6 durch Wandungen 7 bis auf die Ventilsitzöffnungen 8 und 9 gasdicht umbaut ist.

Das eingangsseitige Ventil I besteht aus einem ersten Ventilteller 10, einer ersten Schließfeder 11 und einem Hohlanker 12. Der Hohlanker 12 ist vorzugsweise mit Spiel im ersten Ventilteller 10 gelagert und mit einer Dichtung 27 gegen die anstehende Druckdifferenz abgedichtet. Die erste Schließfeder 11 belastet vorzugsweise den ersten Ventilteller 10 direkt.

Die Magnethubkraft wird durch eine formschlüssige Verbindung vom Hohlanker 12 auf den ersten Ventilteller 10 übertragen, so daß die erste Schließfeder 11 beim Öffnen des Ventils I auf ihre maximale Schließkraft vorgespannt wird.

Das ausgangsseitige Ventil II besteht aus einem zweiten Ventilteller 13, einer zweiten Schließfeder 14 und einem Magnetanker 15. Der Anker 15 hat eine Zugstange 16, die eine formschlüssige, spielbehaftete Verbindung zum zweiten Ventilteller 13 herstellt. Die zweite Schließfeder 14 belastet den zweiten Ventilteller 13 und sorgt bei geschlossenem zweiten Ventilsitz 4 für die erforderliche Dichtkraft auf dem Umfang der Ventilsitzschneide.

Der Magnetanker 15 ist längsverschiebbar auf einer gemeinsamen Achse a im Hohlanker 12 leichtgängig geführt und in seinem Aufwärtshub durch eine nicht-magnetische Scheibe 17 von der Polanlage 18 des Hohlankers 12 abgegrenzt. Dadurch wird ein Kleben des Ankers 15 durch Restmagnetkräfte nach dem Abschalten des Anzugsmagneten verhindert, so daß die zweite Schließfeder 14 das ausgangsseitige Stellglied 15, 16, 13 mit verminderter Kraft, unabhängig vom eingangsseitigen Stellglied 12, 10, in Schließrichtung beschleunigen kann: Schnellschluß als Sicherheitskriterium. Eine Platine 19 auf dem Hohlanker 12 bewirkt das Gleiche gegenüber der Polanlage 20 der Magnetschlußhülse.

Der Magnetantrieb 21 besteht im wesentlichen aus einer Spule 22, einem Magnetgehäuse 23, einem Magnetschlußhülsen-Unterteil 24, einem nicht-magnetischen Mittelteil 25 sowie einem magnetischen Oberteil 26. Bei Erregung der Magnetspule 22 entstehen magnetische Kraftlinien, die so in die beiden Anker 12 und 15 eingeleitet werden, daß sie wie ein homogener Anker gemeinsam angezogen werden bis die Platine 19 an der Polanlage 20 zum Anschlag kommt. Dies bedeutet, daß beide Ventilsitze 3 und 4 gleichzeitig geöffnet werden. Nach Abschalten des Magneten bewirken die Schließfedern 11, 14 für jedes Stellglied ein gleichzeitiges, schnelles Schließen.

Neben der Funktionsart "gemeinsames Öffnen und Schließen" kennt die Praxis die Anforderung des "getrennten Öffnens und Schließens" für beide Ventile, wobei in Gasflußrichtung gesehen stets zuerst das Ventil I geöffnet wird und das Ventil II geschlossen bleibt. Hierbei wird in der Regel über eine seitliche Austrittsbohrung zwischen dem ersten Ventilsitz 3 und dem zweiten Ventilsitz 4 Gas einem separaten in der Zeichnung nicht dargestellten Zündgasventil zugeführt, das den Zündvorgang des Gasbrenners initiiert. Hat der Brenner gezündet, wird das ausgangsseitige Ventil II geöffnet und die Hauptflamme gezündet. Beim Abschalten des Brenners können beide Ventile I und II gemeinsam oder getrennt voneinander, d.h. zuerst das ausgangsseitige und dann das eingangsseitige Ventil geschlossen werden.

Um die Funktionsart des getrennten Öffnens realisieren zu können, sind zwei Voraussetzungen zu erfüllen: Zum ersten muß der Antriebsmagnet ein zweistufiger Hubmagnet mit gleichen bzw. unterschiedlich großen Hubkräften sein. Dies kann durch zwei getrennte Wicklungen geschehen oder durch eine elektronische Beschaltung bewerkstelligt werden, mit der entweder die Speise-Spannung oder der Speise-Strom für die Magnetspule definiert zugeschaltet wird.

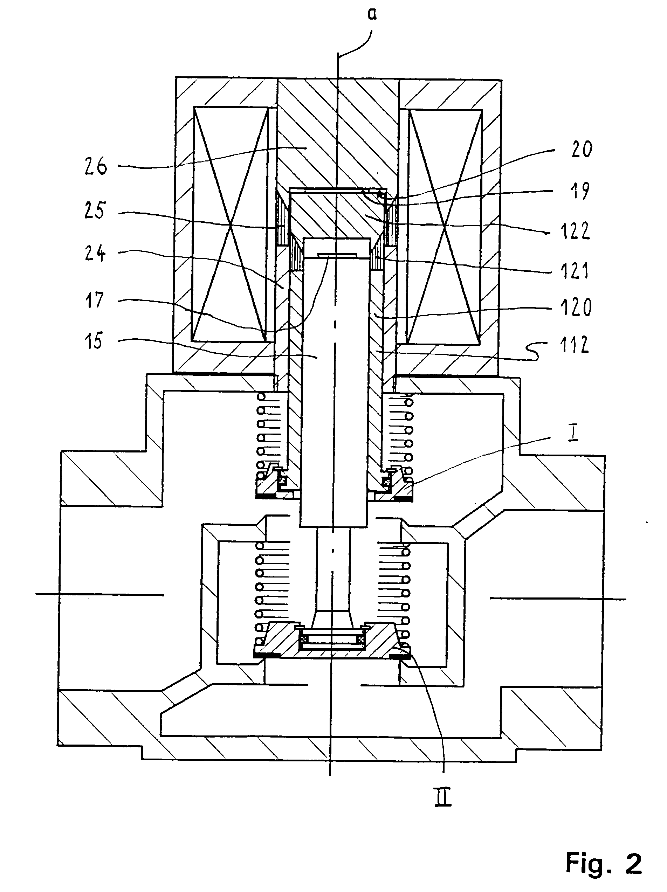

Mit der Hubkraft F₁ wird das eingangsseitige Ventil I geöffnet, wie in Fig. 2 gezeigt ist. Wird zusätzlich eine Hubkraft F₂ erzeugt, so öffnet das ausgangsseitige Ventil II. Der magnetische Eisenkreis des Doppelventils ist für den Hohlanker 112 im Bereich zwischen den beiden Platinen 17 und 19 so anzupassen, daß die Magnetfeldlinien der ersten Stufe voll in die Hubkraft F₁ des Hohlankers umgesetzt werden können. Hat der Hohlanker 112 die Polanlage 20 erreicht, so muß die Schneidengeometrie der Magnetschlußhülse 24, 25, 26 im Oberteil 26 zusammen mit einer in Fig. 2 dargestellten Schneidengeometrie eines Hohlanker-Deckelstückes 122 die Magnetfeldlinien der Magnetkraft F₂ bündeln, daß der Magnetanker 15 die Hubkraft F₂ aufbauen kann. In Fig. 2 ist ein dreiteiliger Hohlanker 112 für das geöffnete, eingangsseitige Ventil dargestellt, der einen rohrförmigen Grundkörper 120 aus magnetischem Material, ein in axialer Richtung daran anschließendes Zwischenstück 121 aus nicht-magnetischem Material und ein daran anschließendes Deckelstück 122 aus magnetischem Material umfaßt.

Während bei dem in Fig. 1 dargestellten gemeinsam öffnenden und gemeinsam schließenden Doppelventil die Schließfederkräfte und die Ventilsitzdurchmesser gleich groß sein können, ist dies bei dem in Fig. 2 dargestellten getrennt öffnenden und getrennt schließenden Doppelventil zwar, wie in Fig. 2 gezeigt, möglich, jedoch nicht unbedingt erforderlich. Bei nicht-dargestellten Ausführungsformen könnten auch unterschiedliche Ventilsitzdurchmesser und unterschiedliche Schließfederkräfte zum Einsatz gelangen.

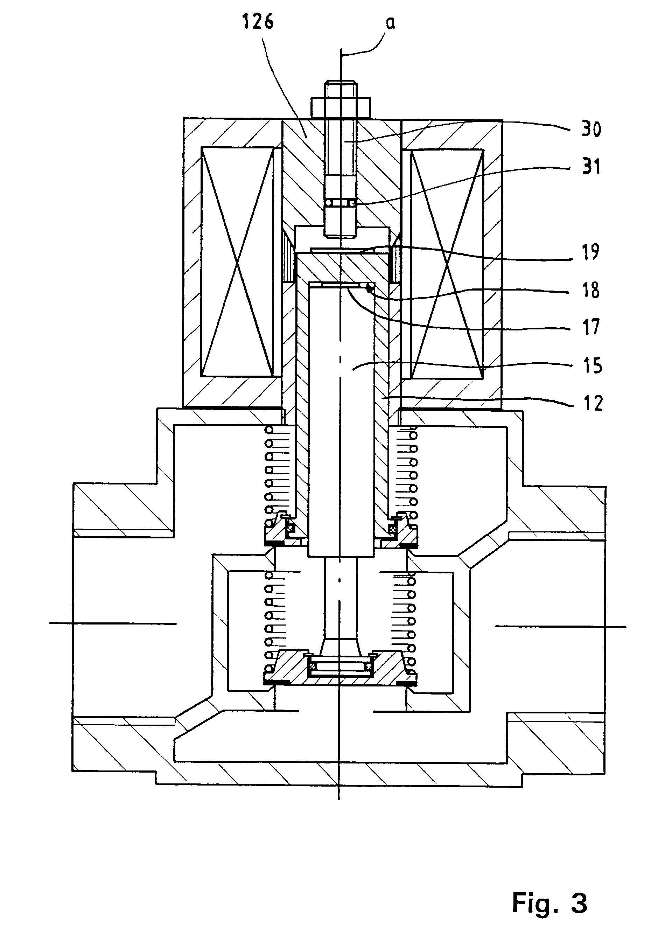

Fig. 3 stellt eine Ausführungsform des erfindungsgemäßen Doppel-Sicherheitsmagnetsventils mit gemeinsam öffnenden und gemeinsam schließenden Stellgliedern dar, wobei auch die Ventilsitzdurchmesser und die Schließfederkräfte im wesentlichen gleich gewählt sind. Die Besonderheit dieser Ausführungsform liegt in der Möglichkeit eines einstellbaren Teilhubes zur Vergrößerung oder Reduzierung des Gasvolumenstromes. Die Hubbegrenzung wirkt auf beide Ventilhübe und wird durch eine Einstellschraube 30 bewerkstelligt, die durch das magnetische Oberteil 126 der Magnetschlußhülse auf der gemeinsamen Achse a hindurchgreift. Beim jeweiligen Extremhub schlägt dann der Hohlanker 12 mit der Platine 19 gegen die Einstellschraube 30. Dadurch wird auch der maximale Hub des Magnetankers 15 mitbegrenzt, welcher mit der nicht-magnetischen Scheibe 17 gegen die Polanlage 18 des Hohlankers 12 schlägt. Zur Abdichtung der Einstellschraube 30 gegenüber dem Außenraum ist ein O-Ring 31 am Umfang der Einstellschraube 30 vorgesehen, so daß kein Gas durch die Bohrung im magnetischen Oberteil 126 nach außen dringen kann.

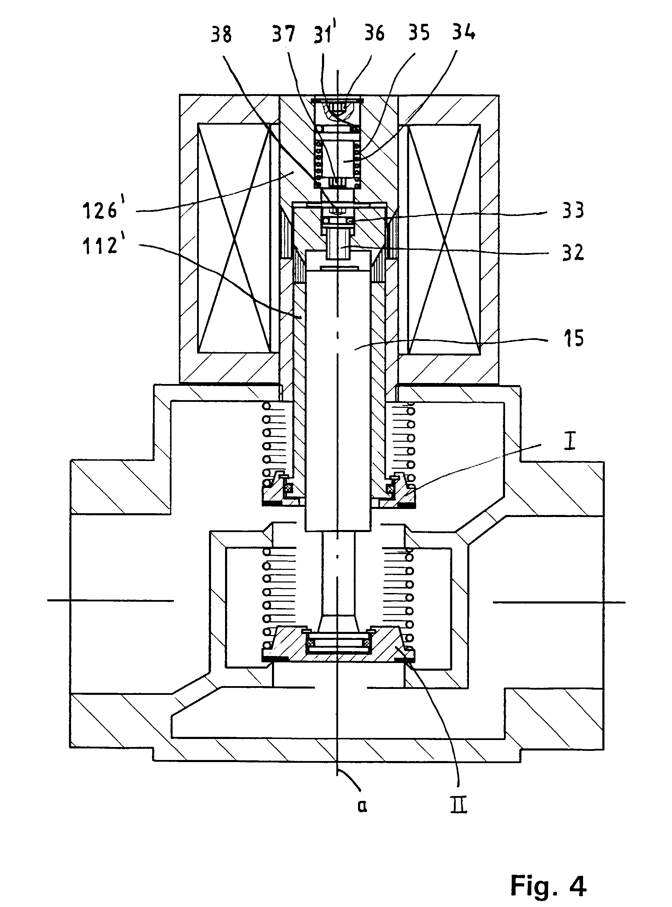

Fig. 4 stellt eine Ausführungsform mit getrennt öffnenden und schließenden Stellgliedern dar, wobei im anschlagseitigen Kopfteil des Hohlankers 112' auf der gemeinsamen Achse a eine auf den Magnetanker 15 als veränderbarer Hubanschlag wirkende Teilhubeinstellschraube 32 vorgesehen ist, die nur das ausgangsseitige Ventil II beeinflußt. Im magnetischen Oberteil 126' der Magnetschlußhülse ist auf der gemeinsamen Achse a eine Hilfsvorrichtung 34 zum Verstellen der Teilhubeinstellschraube 32 vorgesehen, die mittels einer Rückstellfeder 35 nach dem Einstellvorgang von der Teilhubeinstellschraube 32 abgehoben wird und mittels O-Ringes 31' gegenüber dem magnetischen Oberteil 126, sowie mittels eines O-Ringes 33 gegenüber dem Hohlanker 112' abgedichtet ist. Bei der dargestellten Ausführungsform ist die Hilfsvorrichtung 34 mit einem Sechskant 37 in einen darunterliegenden Innensechskant 38 zum Einrasten eindrückbar. Damit kann dann die Teilhubeinstellschraube 32 verstellt werden. An der Oberseite der Vorrichtung ist ein Innensechskant 36 vorgesehen, über den der Sechskant 37 von außen her bedient werden kann. Nach dem Ende des Verstellvorganges stellt die Rückstellfeder 35 die Hilfsvorrichtung 34 wieder in ihre Ruhelage zurück.

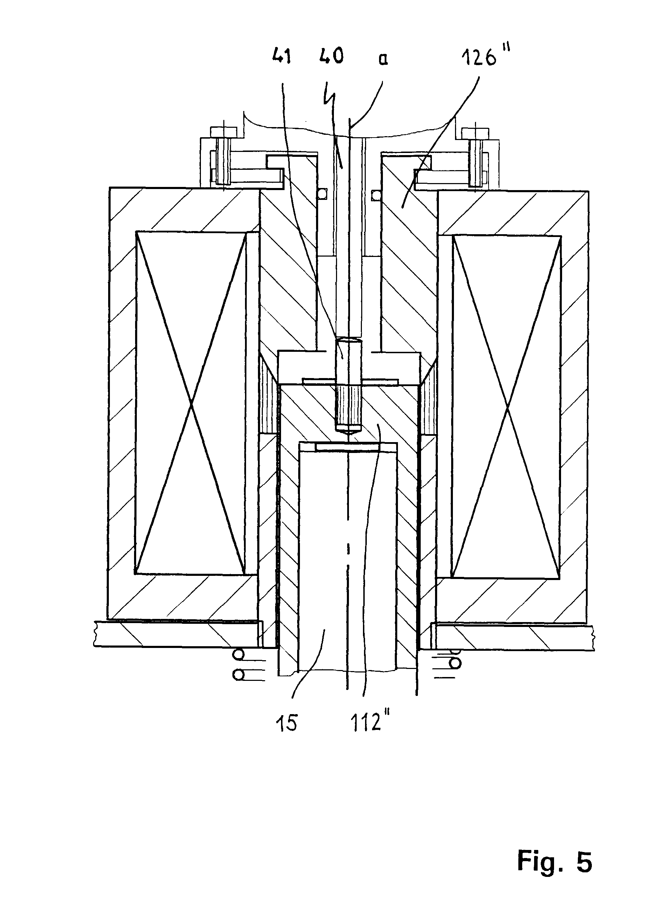

Bei der in Fig. 5 dargestellten Ausführungsform handelt es sich wiederum um ein Doppelventil mit gemeinsam öffnenden und schließenden Stellgliedern. Dabei ist im anschlagseitigen Kopfteil des Hohlankers 112" ein auf der gemeinsamen Achse a nach oben ragender Anschlagstift 41 vorgesehen, auf den ein durch das magnetische Oberteil 126'' der Magnetschlußhülse hindurchgreifender Hydraulikdämpfer 40 in axialer Richtung einwirkt. Damit kann die Hubbewegung des Hohlankers 112'' und damit gleichzeitig auch die Hubbewegung des Magnetankers 15 anschlagseitig sanft abgebremst werden, was zu einem langsamen Öffnen beider Ventile und damit zu einer sanften Einschaltcharakteristik am Gasbrenner führt.

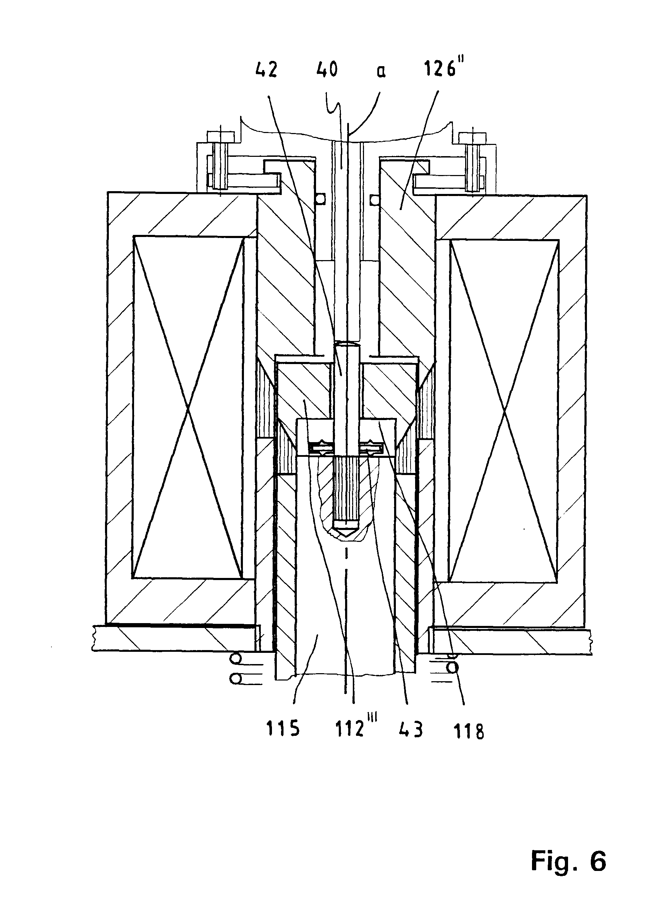

Fig. 6 zeigt ebenfalls eine Ausführungsform mit einem Hydraulikdämpfer 40, der in diesem Fall jedoch nicht auf den Hohlanker 112''', sondern auf den Magnetanker 115, genauer gesagt auf einen aus dem Kopfteil des Ankers 115 nach oben ragenden Anschlagstift 42, der durch eine axiale Bohrung im Kopfteils des Hohlankers 112''' hindurchgreift, einwirkt. Um den Anschlagstift 42 ist ein beidseitig wirkendes Dichtelement 43 angeordnet. Es kann beispielsweise eine beidseitige Dichtlippe aus einem elastomeren Werkstoff, wie etwa Gummi besitzen, der auf eine innere Metallplatine aufvulkanisiert sein. Bei geschlossenen Ventilen drückt die Polanlage 118 auf die Platinendichtlippen und dichtet damit den beispielsweise in Fig. 1 gezeigten Gaseintrittsraum 2 gegenüber dem Zwischenraum 5 ab.

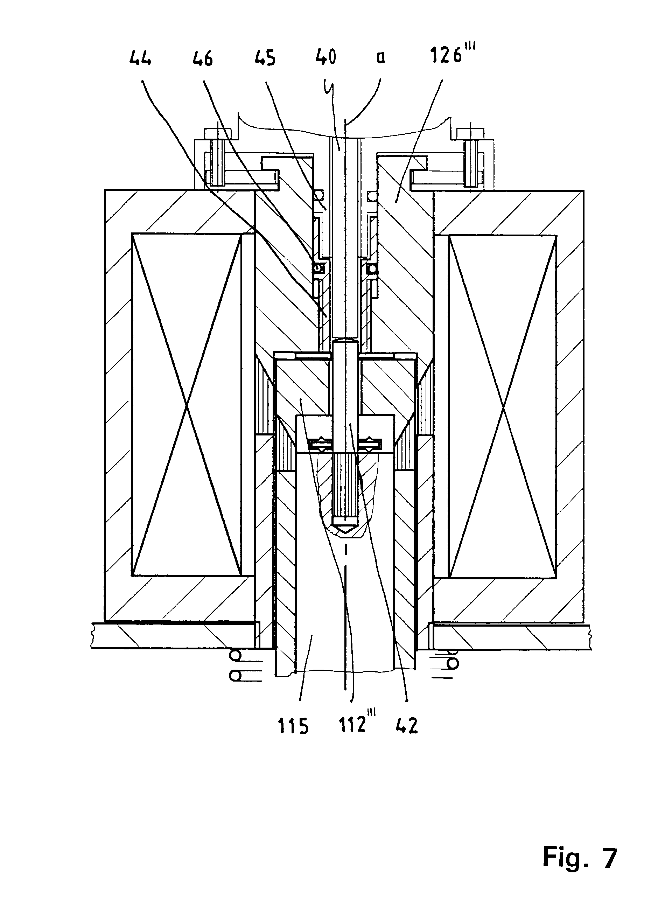

In Fig. 7 ist eine Ausführungsform dargestellt, bei der das ausgangsseitige Ventil durch den Hydraulikdämpfer 40 eine langsame Öffnungscharakteristik aufweist, und bei der der Teilhub des Hohlankers 112''' des eingangsseitigen Ventils über eine Einstellbuchse 44 verstellbar ist. Damit wird gleichzeitig auch der Hub des ausgangsseitigen Magnetankers 115 eingestellt. Die Einstellbuchse 44 ist auf der gemeinsamen Achse a im magnetischen Oberteil 126''' der Magnethülse positioniert. Von oben her ragt der Hydraulikdämpfer 40 und von unten her der Anschlagstift 42, der seinerseits fest im Oberteil des Magnetankers 115 verankert ist, in die Durchgangsbohrung der Einstellbuchse 44 hinein. Mittels einer schematisch dargestellten Verstellvorrichtung 45 kann die Einstellbuchse 44 in axialer Richtung verstellt werden, um damit den Teilhub der beiden Anker zu variieren. Außerdem ist am Außenumfang der Einstellbuchse 44 eine Dichtung in Form eines O-Ringes 46 vorgesehen, mit der die Außenseite des magnetischen Oberteils 126''' gegenüber der Innenbohrung der Magnethülse abgedichtet wird.

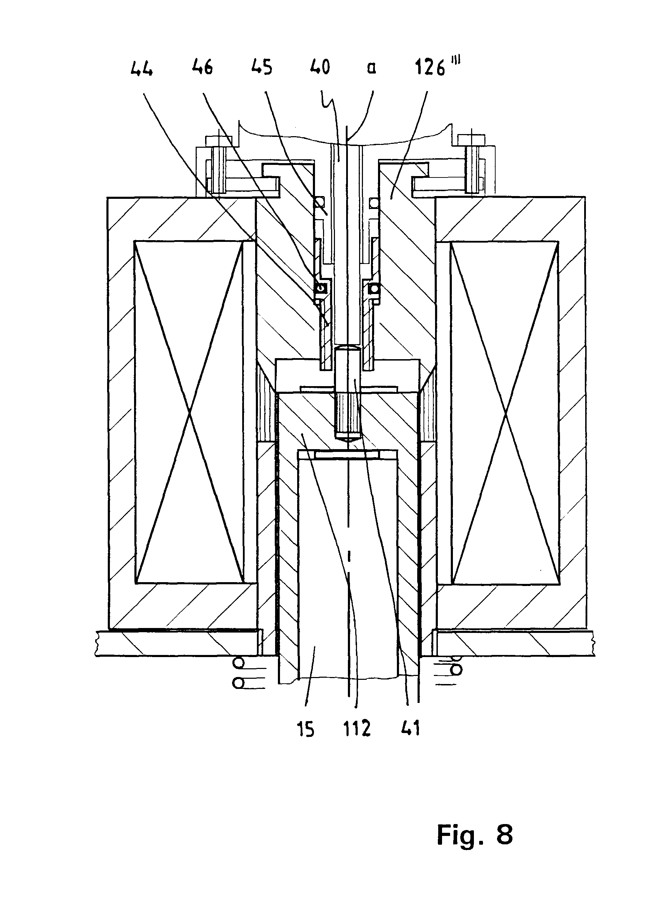

Fig. 8 zeigt eine ähnliche Ausführungsform wie Fig. 7, jedoch mit dem Unterschied, daß der Hydraulikdämpfer 40 nicht auf einen im Magnetanker sitzenden Stift, sondern auf einen im Oberteil des Hohlankers 112'' sitzenden Anschlagstift 41 wirkt. Damit ist ein langsames Öffnen beider Ventile aufgrund der Hydraulikdämpfung gewährleistet. Die Teilhubeinstellung über die Einstellbuchse 44 wirkt direkt auf den Hohlanker 112'' und somit auch auf den Teilhub des Magnetankers 15.

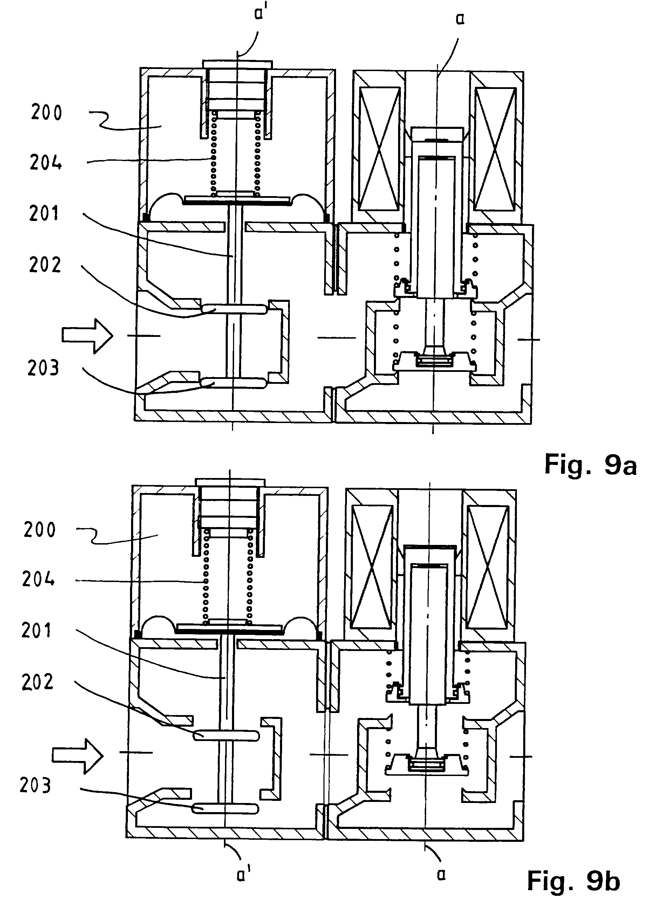

Ein zweiachsiger Aufbau ist in den Figuren 9a und 9b dargestellt, wobei nunmehr jedoch der Druckregler 200, der als Stellglied ein Doppelsitzventil 201 mit zwei starr durch eine Stange verbundenen Ventiltellern 202, 203 umfaßt, eine zur gemeinsamen Achse a des nachgeschalteten erfindungsgemäßen Doppel-Sicherheitsmagnetventils parallele Achse a' aufweist. Das Funktionsprinzip der in den Figuren 9a und 9b dargestellten Ausführungsform ist das für den Brennerstart eines bekannten Reglers übliche:
Der Regler beginnt aus der Geschlossenposition heraus zu arbeiten, wenn die Ventile öffnen. In Fig. 9a ist die Stellgliedlage des Reglers bei geschlossenen Ventilen dargestellt. Öffnen die Ventile, so sackt der Druck im Ausgangsbereich des Reglerteiles ab, und der Regler muß zum Nachspeisen des über eine Sollwertfeder 204 eingestellten Ausgangsdruckes öffnen. Fig. 9b zeigt die Armatur mit geöffneten Ventilen und eingeschwungenem Reglerstellgleid. Der Vorteil des vorgeschalteten Druckreglers 200 liegt darin, daß ein Anfahrstoß durch eine zu große Startgasmenge vermieden wird.

Bei nicht dargestellten Ausführungsformen kann eingangsseitig vor dem Regler auch noch ein Druckwächter und/oder eine Gasfiltermatte eingebaut werden, die im Gasstrom mitgeführte Partikel aus der empfindlichen Verbundarmatur fernhält.

Im gezeigten Beispiel ist der Druckregler 200 in einem eigenen Gehäuse untergebracht. Dadurch kann die erfindungsgemäße Doppel-Sicherheitsmagnetventil-Einheit mit ihrem kompletten Gehäuse an den Reglerausgang angeflanscht und somit in bereits vorhandenen Gasstraßen problemlos nachgerüstet werden. Bei in der Zeichnung nicht dargestellten Ausführungsformen können allerdings der Regler und das nachgeschaltete Doppel-Sicherheitsmagnetventil ein gemeinsames Gehäuse aufweisen, so daß die gesamte Kombinationsarmatur kompakter wird.

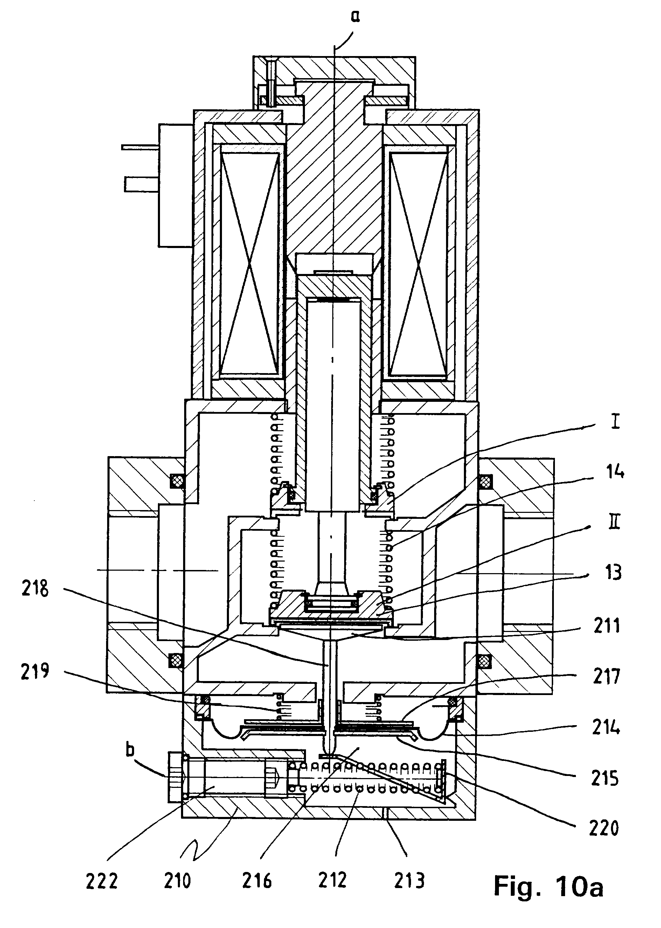

Einen noch höheren Integrationsgrad als alle bisher bekannten Kombinationsarmaturen weisen die in den Figuren 10a bis 12 dargestellten erfindungsgemäßen Multifunktional-Armaturen auf:

In Fig. 10a ist eine Multifunktions-Armatur gezeigt, die die gleichen Vorteile eines stoßfreien Brennerstarts bietet, wie die in Fign. 9a und 9b gezeigte Ausführungsform, aber eine kompakte einachsige Lösung darstellt, da sowohl die beiden Ventile I und II als auch der Regler auf einer einzigen Längsachse, nämlich der gemeinsamen Achse a angeordnet sind. Dadurch kann die Baulänge der Armatur nahezu halbiert werden. Der Regler wird beim Schließen der Ventile in Geschlossenstellung gebracht. Wird die Ventilachse mit einem Dämpfer ausgestattet, wie z.B. in Fig. 5 dargestellt, so läßt sich ein sanftes Anfahren des Brenners realisieren. In Geschlossenstellung des ausgangsseitigen Ventiles II verhindert der zweite Ventilteller 13 das Öffnen des Reglers. Das Stellglied des Reglers 210 wird ebenfalls in Geschlossenstellung gehalten. Die Schließfederkraft des zweiten Ventiltellers 13 muß die Federkraft einer Regler-Einstellfeder 212 überwinden. Öffnet das ausgangsseitige Ventil II, so beginnt auch der Öffnungshub des Reglers 210 aus seiner Geschlossenstellung heraus. Dies kann bezüglich der Öffnungsgeschwindigkeit des zweiten Ventiltellers 13 durch die Funktionseinheit für langsames Öffnen aus Fig. 8 noch entsprechend verlangsamt werden. Der Reglerventilteller 211 des Reglers 210 hat einen Außendurchmesser, der kleiner ist als der lichte Durchmesser der Ventilsitzbohrung im Gehäuse. Die Durchmesserdifferenz bzw. die Spaltweite zwischen Teller und Bohrung bestimmt zusammen mit dem vorhandenen Druckgefälle die kleinste noch auszuregelnde Gasmenge. Der Reglerventilteller 211 darf die Funktion des zweiten Ventiltellers 13 nicht beeinträchtigen, was bei Gassicherheitsventilen besonders die Schließgeschwindigkeit betrifft. Bei beispielsweise voll geöffnetem Regler 210 und erfolgender Abschaltung des Hubmagneten muß die Schließfeder 14 des ausgangsseitigen Ventils II gegen die Kraft der Regler-Einstellfeder 212 und auch gegen den sich unter der Regler-Arbeitsmembran 214 aufbauenden Gegendruck den Regler 210 in Geschlossenstellung bringen. Durch den Abwärtshub des Reglerstellgliedes wird in dem mit der Atmosphäre über eine kleine Dämpfungsdüse 213 verbundenen Raum ein Gegendruck aufgebaut, der das schnelle Schließen des Reglerventils und damit des ausgangsseitigen Ventils II verhindert. Um dies auszuschließen und die geforderte Schließzeit ≤ 1 Sekunde sicherzustellen, wird beim Schließhub des Reglerstellgliedes die Arbeitsmembran 214 vom Membranteller 215 freigegeben, so daß der entstehende atmosphärische Überdruck im Raum 216 die Membran gegen einen federbelasteten Gegenteller 217 andrückt. Der Gegenteller 217 ist auf der Stellgliedstange 218 längsverschieblich gelagert. Befindet sich der Reglerventilteller 211 in Geschlossenstellung, so schmiegt eine Rückstellfeder 219 den Gegenteller 217 und die Arbeitsmembran 214 nach Maßgabe des Druckabfalls über die Dämpfungs- oder Atmungsdüse 213 wieder an den mit der Stange 218 fest verbundenen Membranteller 215 an. Beim nächsten Start ist die Arbeitsmembran 214 wieder kraftschlüssig mit dem Membranteller 215 verbunden und kann ohne Verlust an Regelgüte starten. Die Regler-Einstellfeder 212 für den Reglerausgangsdruck ist bei der in Fig. 10a gezeigten Ausführungsform horizontal eingebaut und vorzugsweise von der Eingangsseite der Armatur her in Gasflußrichtung über eine Stellschraube 222 einstellbar. Ein Umlenkhebel 220 bringt die Federkraft auf die Stange 218 des Stellgliedes.

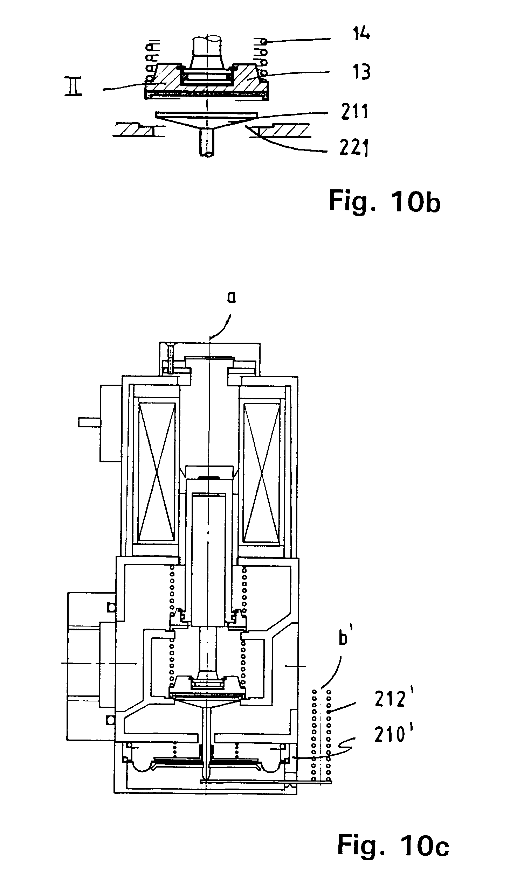

In Fig. 10b ist das ausgangsseitige Ventil II in geöffneter Stellung und der Reglerventilteller 211 in Arbeitsstellung dargestellt. Der Ausgangsdruck wird durch die bewegliche ringförmige Drosselstelle 221 dem jeweiligen Volumenstrom angepaßt.

In Fig. 10c ist lediglich die Einbaulage der Einstellfeder geändert. Die Regler-Einstellfeder 212' hat eine Längsachse b', die parallel zur gemeinsamen Achse a verläuft, während bei der in Fig. 10a dargestellten Ausführungsform die Längsachse b der Regler-Einstellfeder 212 senkrecht oder windschief zur gemeinsamen Achse a verläuft.

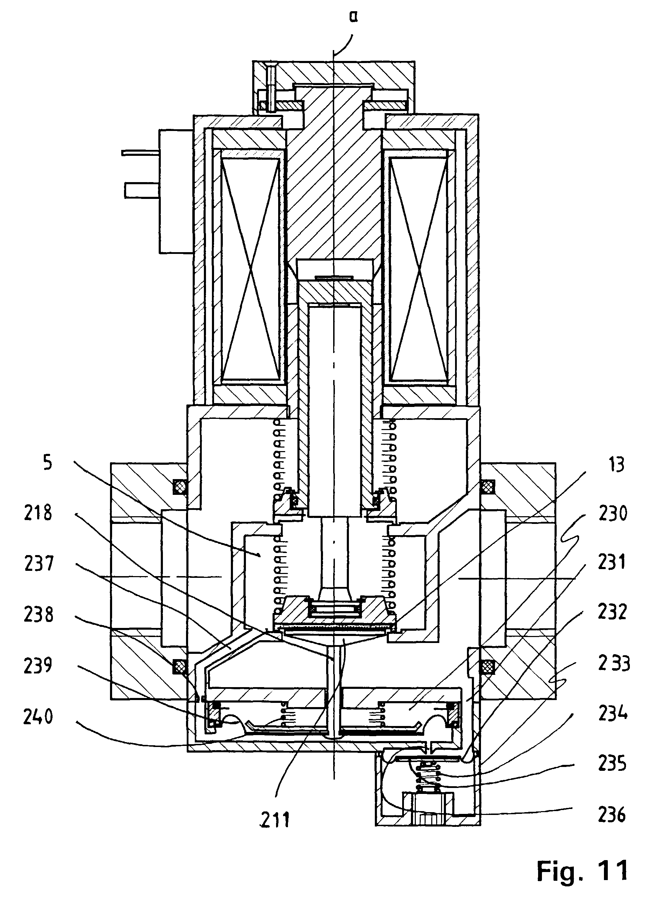

In Fig. 11 ist der federbelastete Regler durch einen vorgesteuerten Servoregler 230 ersetzt worden. Der Ausgangsdruck nach dem Regler 230 wird über einen Ausgangsdruckkanal 231 auf die federbelastete Membran 232 eines Pilotreglers 233 geleitet. Halten sich die Kräfte aus wirksamer Membranfläche mal Ausgangsdruck und der Einstellfeder 234 am Membranteller 235 im Gleichgewicht, so strömt bei geöffneten Hauptventilen aus der Regelventilbohrung 236 ein kleiner Gasvolumenstrom zum Ausgang der Armatur. Bei geöffneten Hauptventilen wird über einen Kanal 237 und eine angepaßte austauschbare Steuerdüse 238 der im Zwischenraum 5 sich einstellende Gasdruck unter die Arbeitsmembran 239 des Reglers 230 geleitet. Ist die Regelventilbohrung 236 durch die federbelastete Membran 232 verschlossen, so geht das Stellglied des Reglers in die voll geöffnete Stellung, weil sich unter der Arbeitsmembran 239 der volle Gasdruck des Zwischenraumes 5 aufbaut. Über der Reglermembran steht der Ausgangsdruck der Armatur an. Um den Regler 230 zu schließen, muß der Druck unter der Arbeitsmembran 239 durch Öffnen der Regelventilbohrung 236 soweit abgesenkt werden bis sich der an der Einstellfeder 234 einjustierte Ausgangsdruck einstellt. Eine Druckfeder 240 sorgt zusammen mit dem Eigengewicht des gesamten Reglerstellgliedes für das selbsttätige Schließen des Reglers 230.

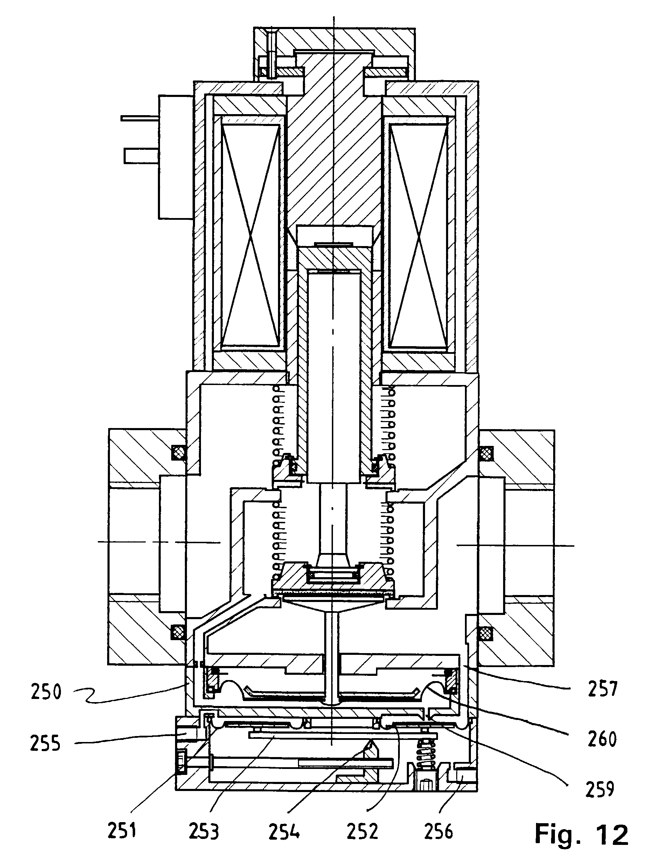

Fig. 12 zeigt eine Multifunktional-Armatur für eine Anwendung als Gas/Luftverbundregler. Der Verhältnisregler 250 besteht im wesentlichen aus einer mit Gebläseluftdruck beaufschlagten Membran 251, einer mit dem Gasausgangsdruck beaufschlagten Membran 252, einem Waagebalken 253, der auf einer verschiebbaren Schneide 254 aufliegt und das Hebelarmverhältnis ausbildet. Der Gebläseluftdruck wird vom Brenner kommend an eine Anschlußbohrung 255 gelegt, der Feuerraumdruck an einem Anschluß 256 und der Gasdruck über einen Ausgangsdruckkanal 257 der gasseitigen Membran intern zugeführt. Dieser Anschluß kann auch wie die Anschlüsse 255 bzw. 256 von extern erfolgen.

Alle Funktionsvarianten des erfindungsgemäßen Doppel-Sicherheitsmagnetventils, wie "getrennt angesteuert", "gemeinsam angesteuert", "mit Teilhubeinstellung eingangs- bzw. ausgangsseitig", "langsames Öffnen beider Ventile oder nur für das ausgangsseitige Ventil", sind auch auf die Multifunktional-Armaturen nach den Fign. 10 und 11 anwendbar. Lediglich die in Fig. 12 gezeigte Ausführungsform bleibt so wie dargestellt, für gemeinsam öffnend ohne Zusatzfunktionen.

## Patentansprüche

1. Doppel-Sicherheitsmagnetventil mit zwei voneinander unabhängigen, in Serie geschalteten und in einem gemeinsamen Gehäuse (1) untergebrachten Ventilen (I, II) mit Stellgliedern, die jeweils einen Ventilteller (10, 13) und einen mit dem Ventilteller kraft- oder formschlüssig verbundenen Anker umfassen, wobei die Ventilteller (10, 13) gegen den Federdruck jeweils mindestens einer Schließfeder (11, 14) bei Stromdurchfluß durch einen eine Magnetspule (22) enthaltenden Magnetantrieb (21) von ihrem jeweiligen Ventilsitz (3, 4) abheben und dadurch einen Öffnungsquerschnitt für einen Fluidstrom freigeben,
dadurch gekennzeichnet,
daß die beiden Stellglieder auf einer gemeinsamen Achse (a), vorzugsweise übereinander angeordnet sind, daß das erste Stellglied einen Hohlanker (12; 112; 112'; 112''; 112''') aufweist, in welchen der Magnetanker (15; 115) des zweiten Stellgliedes längsverschiebbar entlang der gemeinsamen Achse (a) ragt, und daß nur ein einziger Magnetantrieb (21) für beide Stellglieder vorgesehen ist, in den der Hohlanker (12; 112; 112', 112'', 112''') und der Magnetanker (15; 115) hineinragen.

2. Doppel-Sicherheitsmagnetventil nach Anspruch 1, dadurch gekennzeichnet, daß der Magnetantrieb (21) mindestens eine in einem Magnetgehäuse (23) angeordnete Magnetspule (22) sowie eine radial innerhalb der Magnetspule (22) angeordnete Magnetschlußhülse umfaßt, welche aus einem magnetischen Oberteil (26), einem in axialer Richtung der gemeinsamen Achse (a) unterhalb daran anschließenden nicht-magnetischen Mittelteil (25) und einem in axialer Richtung an das Mittelteil (25) anschließenden, magnetischen Unterteil (24) besteht, wobei der Hohlanker (12; 112; 112'; 112''; 112''') beim Ventilöffnungshub in die Magnetschlußhülse hineingezogen wird.

3. Doppel-Sicherheitsmagnetventil nach einem der vorhergehenden Ansprüche, dadurch gekennzeichnet, daß die erste Schließfeder (11), die den ersten Ventilteller (10) gegen den ersten Ventilsitz (3) drückt, ungefähr denselben Federdruck auf den ersten Ventilteller (10) ausübt, wie die zweite Schließfeder (14) auf den zweiten Ventilteller (13), und daß die Sitzdurchmesser der Ventilsitze (3, 4) im wesentlichen gleich groß sind.

4. Doppel-Sicherheitsmagnetventil nach einem der vorhergehenden Ansprüche, dadurch gekennzeichnet, daß der Magnetantrieb (21) einen zweistufigen Hubmagnet mit zwei gleichen oder zwei unterschiedlich großen Hubkräften F₁ und F₂ umfaßt.

5. Doppel-Sicherheitsmagnetventil nach Anspruch 4, dadurch gekennzeichnet, daß der Hohlanker (112) einen im wesentlichen rohrförmigen Grundkörper (120) aus magnetischem Material, ein in axialer Richtung daran anschließendes Zwischenstück (121) aus nicht-magnetischem Material und ein an diese sich axial anschließendes Deckelstück (122) aus magnetischem Material umfaßt.

6. Doppel-Sicherheitsmagnetventil nach einem der Ansprüche 1 bis 4, dadurch gekennzeichnet, daß der Hohlanker aus nicht-magnetischem Material ausgebildet ist.

7. Doppel-Sicherheitsmagnetventil nach einem der vorhergehenden Ansprüche, dadurch gekennzeichnet, daß ausgangsseitig ein Druckregler (210; 230; 250) nachgeschaltet ist, dessen Reglerachse mit der gemeinsamen Achse (a) zusammenfällt.

8. Doppel-Sicherheitsmagnetventil nach Anspruch 7, dadurch gekennzeichnet, daß der Druckregler (210; 230; 250) ein Reglerstellglied umfaßt, das einen an einer längs der gemeinsamen Achse (a) verschieblichen Stange (218) starr befestigten Reglerventilteller (211) aufweist, dessen Außendurchmesser kleiner ist, als der lichte Durchmesser der Ventilsitzbohrung des ausgangsseitigen Ventils (II), und der bei entsprechender Ausregelung von unten gegen den zweiten Ventilteller (13) des zweiten Stellgliedes anschlägt.

9. Doppel-Sicherheitsmagnetventil nach einem der Ansprüche 7 oder 8, dadurch gekennzeichnet, daß der Druckregler (230) ein Servoregler ist, der einen über einen Ausgangsdruckkanal (231) mit dem Ausgangsdruck nach dem Regler beaufschlagten Pilotregler (233) umfaßt, welcher über eine Regelventilbohrung (236) den Fluiddruck unter einer Arbeitsmembran (239) des Hauptregelgliedes regelt.

10. Doppel-Sicherheitsmagnetventil nach einem der Ansprüche 7 oder 8, dadurch gekennzeichnet, daß der Druckregler (250) ein Verhältnisregler ist, der eine Hebelmechanik umfaßt, welche auf der einen Seite über eine Anschlußbohrung (255) mit einem Gebläseluftdruck sowie über einen Ausgangsdruckkanal (257) mit dem Ausgangsdruck nach dem Regler und auf der anderen Seite über einen Anschluß (256) mit dem Feuerraumdruck eines Gasbrenners beaufschlagt ist, wobei die Hebelmechanik eine Regelbohrung (259), über die der Raum unter einer Arbeitsmembran (260) des Hauptregelgliedes mit dem Ausgangsdruck beaufschlagt werden kann, auf- bzw. zusteuert.

## Claims

1. Double-safety magnetic valve with two valves (I, II) which are mutually independent and which are circuited in series and accommodated in a common housing (1), the valves having actuators each of which includes a valve head (10, 13) and an armature connected to the valve head in a non-positive or positive manner, wherein each valve head (10, 13) is lifted from its respective valve seat (3, 4) when current flows through a magnetic drive (21), comprising a magnetic coil (22), in opposition to the spring pressure of a closing spring (11, 14) to open a cross-section for fluid flow,
characterized in that,
the two actuators are disposed on a common axis (a), preferentially one above another, and the first actuator has a hollow armature (12; 112; 112'; 112''; 112''') within which the magnetic armature (15; 115) of the second actuator penetrates in a longitudinally displaceable fashion along the common axis (a), wherein both actuators share one single magnetic drive (21) into which the hollow armature (12; 112; 112', 112'', 112''') and the magnetic armature (15; 115) penetrate.

2. Double-safety magnetic valve according to claim 1, characterized in that the magnetic drive (21) comprises at least one magnet coil (22) disposed in a magnet housing (23) as well as a magnetic end bushing disposed radially within the magnet coil (22) and consisting essentially of a magnetic upper component (26), a non-magnetic middle component (25) located below and adjacent thereto in an axial direction of the common axis (a), and a magnetic lower component (24) adjacent to the middle component (25) in the axial direction, wherein the hollow armature (12; 112; 112'; 112''; 112''') is pulled into the magnetic end bushing during a valve opening stroke.

3. Double-safety magnetic valve according to any one of the preceding claims, characterized in that the first closing spring (11) which presses the first valve head (10) against the first valve seat (3) exerts approximately the same spring pressure on the first valve head (10) as the second closing spring (14) exerts on the second valve head (13), wherein the seat diameters of the valve seats (3, 4) are substantially the same.

4. Double-safety magnetic valve according to any one of the preceding claims, characterized in that the magnetic drive (21) comprises a two-stage lifting magnet with two equal or two differing lifting forces F₁ and F₂.

5. Double-safety magnetic valve according to claim 4, characterized in that the hollow armature (112) comprises a substantially tubular base body (120) made from a magnetic material, and an adapter (121), adjacent thereto in an axial direction, made from a non-magnetic material, and a lid member (122) axially adjacent to the adapter (121) and made from a magnetic material.

6. Double-safety magnetic valve according to any one of the claims 1 through 4, characterized in that the hollow armature is made from a non-magnetic material.

7. Double-safety magnetic valve according to any one of the preceding claims, characterized by a downstream pressure regulator (210; 230; 250) at the output side, whose regulator axis is coincident with the common axis (a).

8. Double-safety magnetic valve according to claim 7, characterized in that the pressure regulator (210; 230; 250) comprises a regulator actuator having a regulator valve head (211) rigidly attached to a rod (218) which can be displaced along the common axis (a), the outer diameter of the regulator valve head (211) being smaller than the clearance diameter of the valve seat bore of the output side valve (II), and which abuts from the lower side against the second valve head (13) of the second actuator in response to associated regulation.

9. Double-safety magnetic valve according to any one of the claims 7 or 8, characterized in that the pressure regulator (230) is a servo regulator including a pilot regulator (233) subjected to the output pressure downstream of the regulator via an output pressure channel (231), the pilot regulator (233) regulating the fluid pressure below a working membrane (239) of the main regulation member via a regulator valve bore (236).

10. Double-safety magnetic valve according to any one of the claims 7 or 8, characterized in that the pressure regulator (250) is a ratio controller including a lever mechanism which is subjected at one side to a blower air pressure via a connecting bore (255) as well as to the output pressure downstream of the regulator via an output pressure channel (257) and whose other side is subjected to a furnace pressure of a gas burner via a connection (256), wherein the lever mechanism opens or closes a regulator bore (259) via which the space below a working membrane (260) of the main regulator member can be subjected to the output pressure.

## Revendications

1. Double soupape magnétique de sécurité, comprenant deux soupapes (I, II) indépendantes l'une de l'autre, branchées en série et logées dans un boîtier commun (1), avec des organes de positionnement, qui comprennent respectivement un opercule de soupape (10, 13) et une armature reliée par coopération de forces ou par coopération de formes à l'opercule de soupape, et dans laquelle l'opercule de soupape (10, 13) est soulevé de son siège de soupape respectif (3, 4) à l'encontre de la force élastique d'au moins un ressort de fermeture (11, 14) lors du passage de courant à travers un circuit magnétique (21) qui contient un bobinage magnétique (22), et libère ainsi une section d'ouverture pour un courant de fluide,
caractérisée en ce que
les deux organes de positionnement sont agencés sur un axe commun (a), de préférence l'un au-dessus de l'autre, en ce que le premier organe de positionnement comprend une armature creuse (12 ; 112 ; 112' ; 112" ; 112‴), dans laquelle dépasse l'armature magnétique (15 ; 115) du deuxième organe de positionnement, avec faculté de translation longitudinale le long de l'axe commun (a), et en ce qu'il n'est prévu qu'un unique circuit magnétique (21) pour les deux organes de positionnement, dans lequel pénètrent l'armature creuse (12 ; 112 ; 112'; 112" ; 112‴) et l'armature magnétique (15 ; 115).

2. Double soupape magnétique de sécurité selon la revendication 1, caractérisée en ce que le circuit magnétique (21) comprend au moins un bobinage magnétique (22) agencé dans un boîtier magnétique (23), ainsi qu'un manchon de fermeture magnétique agencé radialement à l'intérieur du bobinage magnétique (22), ce manchon étant formé par une partie supérieure magnétique (26), par une partie centrale non magnétique (25) qui se raccorde à celle-ci au-dessous en direction axiale de l'axe commun (a), et par une partie inférieure (24) qui se raccorde en direction axiale à la partie centrale (25), et en ce que l'armature creuse (12 ; 112 ; 112'; 112" ; 112‴) est tirée vers l'intérieur dans le manchon magnétique lors de la course d'ouverture de la soupape.

3. Double soupape magnétique de sécurité selon l'une des revendications précédentes, caractérisée en ce que le premier ressort de fermeture (11), qui repousse le premier opercule de soupape (10) contre le premier siège de soupape (3) exerce approximativement la même pression élastique sur le premier opercule de soupape (10) que celle que le deuxième ressort de fermeture (14) exerce sur le deuxième opercule de soupape (13), et en ce que les diamètres des sièges de soupapes (3, 4) sont sensiblement égaux.

4. Double soupape magnétique de sécurité selon l'une des revendications précédentes, caractérisée en ce que le circuit magnétique (21) comprend un aimant de levage à deux étages présentant deux forces de levage (F1 et F2) égales, ou différentes.

5. Double soupape magnétique de sécurité selon la revendication 4, caractérisée en ce que l'armature creuse (112) comprend un corps de base (120) de forme sensiblement tubulaire en matériau magnétique, une pièce intermédiaire (121) en matériau non magnétique qui s'y raccorde en direction axiale, et une pièce de couverture (122) en matériau magnétique qui s'y raccorde en direction axiale.

6. Double soupape magnétique de sécurité selon l'une des revendications 1 à 4, caractérisée en ce que l'armature creuse est réalisée en un matériau non magnétique.

7. Double soupape magnétique de sécurité selon l'une des revendications précédentes, caractérisée en ce qu'un régulateur de pression (210 ; 230 ; 250) est branché du coté sortie, dont l'axe coïncide avec l'axe commun (a).

8. Double soupape magnétique de sécurité selon la revendication 7, caractérisée en ce que le régulateur de pression (210 ; 230 ; 250) comprend un organe de positionnement de régulateur qui comporte un opercule de régulateur (211) fixé de façon rigide sur une barre (218) susceptible de coulisser le long de l'axe commun (a), le diamètre extérieur dudit opercule étant inférieur au diamètre libre du perçage du siège de soupape de la soupape coté sortie (II) et qui, lors d'une régulation correspondante, vient buter depuis le dessous contre le deuxième opercule (13) du deuxième organe de positionnement.

9. Double soupape magnétique de sécurité selon l'une ou l'autre des revendications 7 et 8, caractérisée en ce que le régulateur de pression (230) est un régulateur asservi qui comprend un régulateur pilote (233) attaqué, via un canal de pression de sortie (231), par la pression à la sortie après le régulateur, ledit régulateur pilote (233) régulant la pression du fluide, via un perçage de soupape de régulation (236), au-dessous d'une membrane de travail (239) de l'organe de régulation principal.

10. Double soupape magnétique de sécurité selon l'une ou l'autre des revendications 7 et 8, caractérisée en ce que le régulateur de pression (250) est un régulateur proportionnel, qui comprend un système mécanique à levier, lequel est attaqué d'un côté par une pression d'air comprimé via un perçage de raccordement (255) et par la pression de sortie après le régulateur via un canal de pression de sortie (257), et attaqué de l'autre côté via un raccordement (256) par la pression dans la chambre de combustion d'un brûleur à gaz, et en ce que le système mécanique à levier commande à l'ouverture et à la fermeture un perçage de régulation (259), via lequel la chambre située au-dessous d'une membrane de travail (260) de l'organe de régulation principal peut être alimentée avec la pression de sortie.
